# EUROPEAN PATENT SPECIFICATION

(11) **EP 1 968 264 B1**
(45) Date of publication and mention of the grant of the patent: **24.10.2018**
(21) Application number: 07004098.5
(22) Date of filing: 28.02.2007
(51) Int. Cl.: H04L 12/58

(54) **A method of filtering electronic mails and an electronic mail system**
Verfahren zum Filtern von E-Mails in einem E-Mail-System
Procédé pour filtrer les courriers électroniques, et système de courrier électronique

(43) Date of publication of application: 10.09.2008
(73) Proprietor: STRATO AG, 10587 Berlin (DE)
(72) Inventor: Jansen Arne, 14089 Berlin (DE); Scheffer Tobias, 10247 Berlin (DE); Haider Peter, 66111 Saarbrücken (DE)
(74) Representative: Bittner, Thomas L.

(56) References cited:
- WO-A1-2007/076714
- US-A1- 2004 215 977

## Description

The present invention relates to a method of filtering electronic mails and an electronic mail system.

### Background of the invention

Current filtering techniques for electronic mail suffer from a number of shortcomings. Content based filters have to be updated regularly, because spam senders are adapting to a filter's characteristics quickly and manage to circumvent it from there on. To updates a content-based statistical filter, one needs large amounts of training data: recent electronic spam mails as well as non-spam electronic mails. While electronic spam mails are relatively easy to obtain through so-called spam-traps, obtaining electronic mails which are reliably non-spam is difficult, because assuring that no spams are falsely collected as non-spam training electronic mails would require to manually classify the collected electronic mails. This is often prohibited due to legal and privacy reasons.

Other, non-content based approaches, such as blacklisting of IP-addresses, or authentication of sender addresses, suffer from either a delay between detection of a spam sender and its blacklisting, or the lack of participation of a large portion of all electronic mail users.

In the document US 2003/0172291 A1 techniques are provided which are directed to systems and methods for detecting and preventing the delivery of unsolicited communications. A communication transmitted over a communications network is received and analyzed by a system processor. The system processor can extract attributes from the communication and compare extracted attributes to information stored in a system data store. In processing the communication, the system processor may assign a confidence level, a trust level, or other indicia of content. The result of that processing, analysis, and comparison can be used to direct the further handling of the communication. The system processor can dispose of communications by quarantining, deleting, or forwarding.

In document US 7,177,880, a method and structure for identifying potential relationships between users of a computer network is disclosed. It is proposed to extract relationship information from databases in the computer network in order to establish multiple relationship chains of the users from the relationship information. More specifically, network information and network communications between the users is evaluated to produce metrics and processes the metrics to produce contact information.

In the document US 7,167,910 B2 social information, including computer communication information, is modeled according to a network approach, and users are provided with representations of patterns within their social spaces and graphical interface tools for navigating through the spaces. This can enhance the user's ability to seek out social information and manage their online social relationships. The social mapping includes automatically collecting computer communication information relating to multiple contacts who are in computer communication with each other, one of the multiple contacts being a selected user. The computer communication information is filtered according to one or more preselected criteria to maintain the number of contacts associated with the selected user at or below a selected threshold. The computer communication information is analyzed to determine extents of similarity between the multiple contacts. A visualization of a social map based upon the extents of similarity between the multiple contacts is rendered on a computer display screen so that a user can access and navigate information represented in the social map visualization.

US 2004/215977 A1 (GOODMAN JOSHUA T [US] ET AL) 28 October 2004 (2004-10-28) in §§53-54 discloses a method for spam filtering using sender/receiver relationships and hashes.

### Summary of the invention

It is an object of the invention to provide a method of filtering an electronic mail in an electronic mail system and an electronic mail system with improved techniques for detecting potential abusive electronic mail.

According to one aspect of the invention, a method of filtering an electronic mail in an electronic mail system is provided, the method comprising the steps of: providing an electronic graph representation of electronic mail related characteristics derived from the history of electronic mail exchange in the electronic mail system in a database, and assigning to a present electronic mail provided for transmission in the electronic mail system an electronic indicator indicative of a potential abusive mail character of the present electronic mail by analyzing present electronic mail characteristics based on the graph representation in the database.

According to another aspect of the invention, an electronic mail system is provided, comprising of: a plurality of network stations, each having an ability to function as at least one of a sender of electronic mail and a recipient of electronic mail, a database comprising of an electronic graph representation of electronic mail related characteristics derived from electronic mail exchange history between the plurality of network stations, and a filter component connected to the database and the plurality of network stations and configured to assign to a present electronic mail provided for transmission an electronic indicator indicative of a potential abusive mail character of the present electronic mail by analyzing present electronic mail characteristics based on the graph representation in the database. The filtering component may be implemented as a single unit or with a plurality of units providing different functions, wherein the different units can be provided in one network station or in different network stations. Alternatively, the electronic mail is also referred to as an electronic message or electronic communication.

The method and the electronic mail system are implemented by a combination of hardware and software components.

By considering a graph representation of electronic mail history, including preferably information about sender / recipient combinations improves known techniques such as auto-white-listing, where an electronic mail is considered non-spam if the recipient has sent an electronic mail to the sender in the past. The known technique of auto-white-listing has the weakness that spam senders can forge electronic mails with flipped sender / recipient pairs to trigger the automatic white-listing. Thus it is not sufficient to consider only pairs of addresses. For example, considering a graph representation of addresses involved in former electronic mail exchange results in the opportunity of utilizing more complex relationships between a sender and a recipient, to determine the probability that the recipient actually knows the sender.

In a preferred embodiment, the electronic graph representation is constructed with addresses as nodes and observed sender / recipient pairs as directed edges. Weights of the edges are determined through the number of such observed pairs. Common graph-theoretical measures can be applied to any pair of addresses, such as minimum distance, maximum flow, etc.

In a preferred embodiment, the step of providing the electronic graph representation comprises a step of providing an electronic graph representation of non-content electronic mail related characteristics. This embodiment provides a novel way to classify electronic mails without analyzing the content by utilizing information about the social structure of electronic mail exchange. The content of an email can be arbitrarily chosen by a spam sender, thus it is difficult if not impossible to detect all spam email contents. The observed social structure of email users can only be influenced by spam senders to a small degree.

In a further preferred embodiment, the step of providing the electronic graph representation comprises a step of using sender and recipient information for generating the electronic graph representation of non-content electronic mail related characteristics. If it is probable that the recipient of an electronic mail knows the sender, then the electronic mail is probably personal communication instead of unsolicited spam.

In still a further preferred embodiment, the step of using sender and recipient information comprises a step of using at least one of sender and recipient address information and sender and recipient name information. The sender and recipient information can be considered to provide information on a social structure among electronic mails transmitted. Such social structure information is used to enhance filtering of electronic mails. Social relations are extracted from monitored electronic mails and stored as the electronic graph representation. The combined relations are used to automatically identify non-spam electronic mails with high confidence that optionally can be used as training examples for statistical spam classifiers. Electronic mails classified as non-spam with high confidence by the social structure analyzing system can be used as non-spam training emails for content-based filters.

In a preferred embodiment of the invention, the step of using sender and recipient information for generating the electronic graph representation of non-content electronic mail related characteristics comprises steps of: providing a plurality of electronic pairs of sender and recipient information both related to one electronic mail, and generating the electronic graph representation a plurality of graphical vertices assigned the sender and recipient information and a plurality of directed graphical edges assigned to the pairs of sender and recipient information. Electronic mails can be sent to multiple recipients at once. Therefore, multiple sender / recipient pairs can be extracted from some electronic mails.

Preferred in an embodiment, the step of generating the electronic graph representation comprises a step of orienting the directed graphical edges as originating from a vertex assigned to the sender information and ending at a vertex assigned to the recipient information. The directed graph may represents all observed sender / recipient combinations, which are ordered pairs.

In another preferred embodiment, the step of deriving the electronic mail related characteristics from the electronic mail exchange history comprises a step of analyzing electronic mails handled by at least one node provided in the electronic mail system. An electronic mail may just pass the at least node. In other cases, the electronic mail is only received by the node. Still another electronic mail may be sent by the node. Sender / recipient pairs can be extracted from incoming as well as outgoing electronic mails, to get as much information about the social structure as possible.

In still another embodiment, the method further comprises the following steps of: providing the electronic indicator to a classification component, and classifying the present electronic mail by the classification component as at least one of a solicited electronic mail, an unsolicited electronic mail, and a potential security threat. The relationships between sender and recipients provide insight into the status of an electronic mail. The classification component, for example, maps the relationship information to the label spam or non-spam.

In an embodiment of the invention, the method further comprises a step of using the present electronic mail as a training mail for a statistical filter component if the electronic indicator indicates a non-abusive mail character. If the social structure indicates that the present electronic mail is non-spam, it can be used to enhance content-based filters.

Following, preferred embodiments of the electronic mail system are disclosed.

In still another embodiment, the filter component is provided in an electronic mail transfer agent (MTA). Such mail transfer agents are known as such in various configurations in electronic mail systems.

In another preferred embodiment, the filter component comprises parsing component configured to parse the present electronic mail, and a processing component configured to process parsed information derived from the parsing of the present electronic mail and to provide the electronic indicator indicative of the potential abusive mail character of the present electronic mail by analyzing present electronic mail characteristics derived from the parsed information based on the graph representation in the data base. The filter component may be implemented in one network station or may alternatively provided with several units or components, respectively, implemented in different network stations

In a preferred embodiment of the invention, the electronic graph representation comprises an electronic graph representation of non-content electronic mail related characteristics.

In a preferred embodiment, the electronic graph representation of non-content electronic mail related characteristics comprises sender and recipient information.

In still another embodiment of the invention, the sender and recipient information comprises at least one of sender and recipient address information and sender and recipient name information.

In another preferred embodiment, the electronic graph representation of non-content electronic mail related characteristics comprises a plurality of graphical vertices assigned the sender and recipient information and a plurality of directed graphical edges assigned to the pairs of sender and recipient information.

In a preferred embodiment, the electronic graph representation comprises of non-content electronic mail related characteristics comprises the directed graphical edges as originating from a vertex assigned to the sender information and ending at a vertex assigned to the recipient information.

In another preferred embodiment, the system further comprises a classification component configured to classify the present electronic mail as at least one of a solicited electronic mail, an unsolicited electronic mail, and a potential security threat based in the electronic indicator.

### Description of preferred embodiments of the invention

Following the invention will be described in further detail, by way of example, with reference to different embodiments. In the Figures:
- Fig. 1: shows a pictorial representation of an electronic mail system,
- Fig. 2: shows a pictorial representation of components related to filtering of electronic mails in the electronic mail system depicted in Fig. 1,
- Fig. 3: shows schematically a representation of a data base with a graph representation, a sender / recipient pair of a present electronic mail, and the computation of a electronic indicator for the present electronic mail,
- Fig. 4: shows a flow chart of steps for providing an electronic graph representation of electronic mail related characteristics derived from electronic mail exchange history in the electronic mail system in the data base, and
- Fig. 5: shows a flow chart of a method of filtering electronic mails in the electronic mail system based on the electronic graph representation.

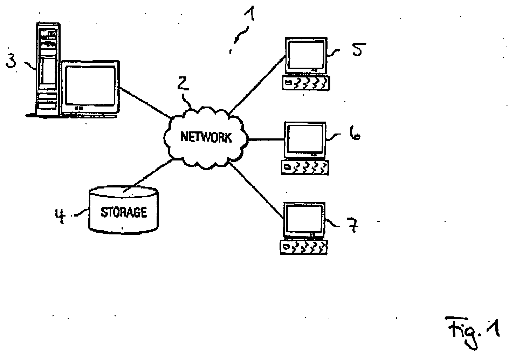

Referring to the figures, Fig. 1 shows pictorial representation of an electronic mail system 1. The electronic mail system 1 is a network of computers in which the present invention may be implemented. The provided electronic mail system 1 contains a network 2, which is the medium use to provide communication links between various devices and computers connected together within the electronic mail system 1. The network 2 may include connections, such as wire, wireless communication links, or fiber optic cables.

In the depicted example, a server 3 which is also referred to as a node is connected to the network 2 along with a storage unit 4. In addition clients 5, 6, and 7 are connected to the network 2. These clients 5, 6, 7 which may also referred to as network stations may be, for example, personal computers or network computers, each having an ability of handling electronic mails as at least one of a sender configured to send electronic mails and a recipient configured to receive electronic mails. In an electronic mail infrastructure, several servers implemented like server 3 are provided by a so-called service provider.

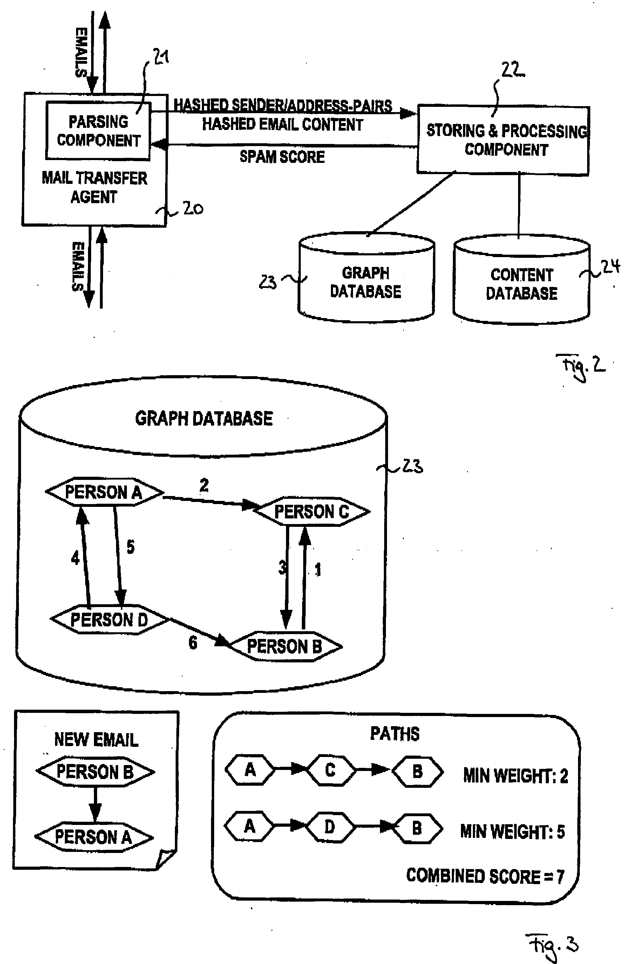

Fig. 2 shows schematically a representation of components related to filtering of electronic mails in the electronic mail system 1 depicted in Fig. 1.

All electronic mails at a node of the electronic mail system 1, for example a mail transfer agent (MTA) 20 at an electronic mail-service provider, are parsed by a parsing component 21. From each electronic mail, a sender address and receiver addresses are extracted. Each of the addresses is then hashed with a one-way function, for example SHA-1, to make the addresses anonymous while preserving the ability to uniquely identify matching addresses later.

For each recipient address, a pair consisting of the sender address (respectively its hash value) and the recipient address (respectively its hash value) is generated and sent to a storing and processing component 22, which is designed to processes and store these pairs. Multiple parsing components may be connected to the storing and processing component 22, to share the social structure information across multiple electronic mail nodes.

The storing and processing component 22 then looks up each pair of hashed addresses in a graph data base 23. In the graph data base 23, all past pairs of hashed addresses are stored. Figuratively, they constitute an electronic graph representation, where each address is a node, and between nodes there are directed edges if and only if in the past a matching pair of addresses, i.e. an electronic mail from the address represented by the first node to the address represented by the second node, has been observed. The weight of an edge shall be the number of electronic mails between the two nodes that have been observed. This graph therefore represents an observed social structure between all observed electronic mail addresses.

The relationship between each sender (now called S) and recipient (now called R) pair of each new electronic mail is inferred from the known electronic graph stored in the data base 23. This can be done in different ways by the storing and processing component 22. The simplest way is to determine if there is an edge from R to S in the graph, which would imply that R has sent an electronic mail to S in the past. Another way is to determine if there is a node A in the graph, where there is an edge from A to S and an edge from A to R, which would imply that S and R have received electronic mails from the same address in the past. More sophisticated ways are to find all paths between R and S in the graph, determine their lengths and minimal weights along all edges of the path. Arbitrary complex measures between the two nodes S and R can be inferred from the graph. From all obtained measures, a total score is calculated, which is also referred to an electronic indicator indicative of a potential abusive mail character of the electronic mail under investigation. It can be done by summing up elementary measures, or computing the arithmetic mean, or arbitrary other combinations, with parameters defined in advance.

The total score of an electronic mail is an arbitrary combination of all scores of its sender recipient pairs. The total score of an electronic mail is then an indicator of the spam status of the electronic mail. For example, if the relationship between recipient and sender is tight, the total score is high, which implies that the electronic mail is non-spam. The total score of an electronic mail can then be used to determine if an electronic mail is spam or non-spam.

Furthermore, in a preferred embodiment the parsing component 21 extracts from the observed electronic mail content information to be stored in a content data base 24. The electronic mail content is preprocessed and hashed, in a way that the original content can no longer be reconstructed (again for privacy reasons), but can be used as training input for a statistical spam classifier. For example, each feature which the statistical classifier uses can be hashed separately, to preserve all information for learning. The hash values obtained from an electronic mail are sent to the processing component, together with the sender / recipient pairs. If the total score of the electronic mail lies above a certain pre-defined threshold and thus the electronic mail is very likely to be non-spam, the processing component stores the content hash values in a separate data base. The hash values in this data base can then be used as training data to enhance content-based statistical spam filters.

Fig. 3 shows an example of the contents of the graph data base 23, the sender / recipient pair of a present electronic mail, and the computation of the total score for the present electronic mail.

The content of the graph data base 23 is the result of the observation of the following numbers of electronic mails (not necessarily in this ordering):
2 electronic mails from person A to person C
3 electronic mails from person C to person B
1 electronic mail from person B to person C
5 electronic mails from person A to person D
4 electronic mails from person D to person A
6 electronic mails from person D to person B

The sender of the new electronic mail is person B, the recipient is person A. In the graph data base 23, there are two paths between A and B: One using C as an intermediate node, and one using D. The first path has a minimum weight of two (the minimum of the weights of the edges A→C and C→B), the second path has a minimum weight of five (the minimum of the weights of the edges A→D and D→B). In the case that the total score of a pair is the sum of the minimal weights of all paths, the total score of the electronic mail in the example is seven. In practice, more complicated ways can be used to calculate the total score of a pair or an electronic mail.

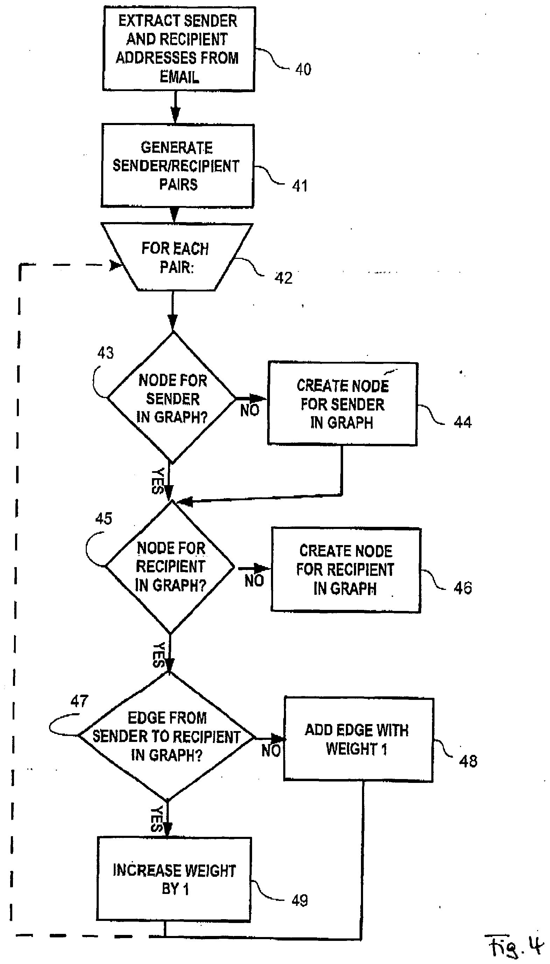

Fig. 4 shows a flow chart of steps for providing an electronic graph representation of electronic mail related characteristics derived from electronic mail exchange history in the electronic mail system in the data base 23.

From a present electronic mail, a sender address and all recipient addresses are extracted (step 40). For each recipient address, a pair consisting of the sender address and the present recipient address is generated (step 41). For each such pair (step 42), the following steps are performed (steps 43 through 49): the electronic graph representation is queried as to whether it includes a node for the sender address (step 43). If not, such a node is added (step 44). Furthermore, the electronic graph representation is queried as to whether it includes a node for the recipient address of the current pair (step 45). If not, such a node is added (step 46). Furthermore, the electronic graph representation is queried whether it contains an edge from the sender address to the recipient address (step 47). If not, such an edge is added and assigned weight 1 (step 48). If such an edge exists, its weight is increased by 1 (step 49).

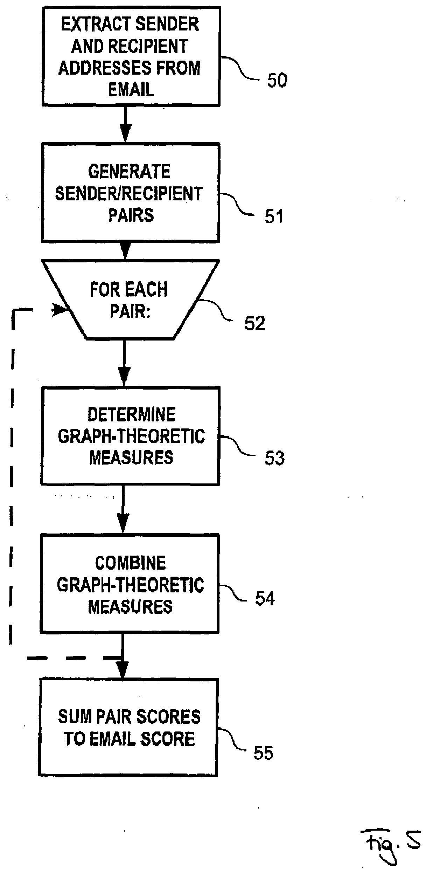

Fig. 5 shows a flow chart of a method of filtering electronic mails in the electronic mail system based on the electronic graph representation in the graph data base 23.

From the present electronic mail, the sender address and all recipient addresses are extracted (step 50). For each recipient address, a pair consisting of the sender address and the current recipient address is generated (step 51). For each such pair (step 52), the following steps are performed ()steps 53 and 54): all graph-theoretic measures chosen by the user are determined (step 53). The measures are combined into a score for the current pair (step 54). Finally, the score for the present electronic mail is obtained by adding all its pair scores (step 55).

## Claims

1. A method of filtering an electronic mail in an electronic mail system (1), the method comprising steps of:
- providing an electronic graph representation of non-content electronic mail related characteristics derived from the history of electronic mail exchange in the electronic mail system (1) in a data base (23), comprising
- providing a plurality of electronic pairs of sender and recipient information both related to one electronic mail, wherein the sender and recipient information comprises sender and recipient address, and wherein the sender and recipient address are hashed, and
- generating the electronic graph representation with a plurality of graphical vertices assigned to the sender and recipient address and a plurality of directed graphical edges assigned to the pairs of sender and recipient address, wherein
- the directed graphical edges are originating from a vertex assigned to the sender address and ending at a vertex assigned to the recipient address, and
- a weight of an edge is the number of emails between the two nodes of the graph representation assigned to the sender and recipient address, and
- assigning to a present electronic mail provided for transmission in the electronic mail system (1) an electronic indicator indicative of a potential abusive mail character of the present electronic mail, comprising:
- parsing the present electronic mail,
- processing parsed information derived from the parsing of the present electronic mail, and
- providing the electronic indicator indicative of the potential abusive mail character of the present electronic mail by analyzing present electronic mail characteristics derived from the parsed information based on the graph representation in the data base (23),
wherein deriving the electronic mail related characteristics from the electronic mail exchange history comprises a step of analyzing electronic mails handled by at least one node provided in the electronic mail system (1).

2. The method according to claim 1, further comprising the following steps of:
- providing the electronic indicator to a classification component, and
- classifying the present electronic mail by the classification component as at least one of a solicited electronic mail, an unsolicited electronic mail, and a potential security threat.

3. The method according to one of the preceding claims, further comprising a step of using the present electronic mail as a training mail for a statistical filter component if the electronic indicator indicates a non-abusive mail character.

4. An electronic mail system (1), comprising:
- a plurality of network stations (5, 6, 7), each having an ability to function as at least one of a sender of electronic mail and a recipient of electronic mail,
- a data base (23) comprising an electronic graph representation of non-content electronic mail related characteristics derived from electronic mail exchange history between the plurality of network stations (5, 6, 7), and
- a filter component (21, 22) connected to the data base (23) and the plurality of network stations (5, 6, 7) and configured to assign to a present electronic mail provided for transmission an electronic indicator indicative of a potential abusive mail character of the present electronic mail, comprising:
- a parsing component (21) configured to parse the present electronic mail, and
- a processing component (22) configured to process parsed information derived from the parsing of the present electronic mail and to provide the electronic indicator indicative of the potential abusive mail character of the present electronic mail by analyzing present electronic mail characteristics derived from the parsed information based on the graph representation in the data base (23),
wherein
- the electronic graph representation of non-content electronic mail related characteristics comprises
- a plurality of electronic pairs of sender and recipient information both related to one electronic mail, wherein the sender and recipient information comprises sender and recipient address, and wherein the sender and recipient address are hashed,
- a plurality of graphical vertices assigned to the sender and recipient address, and
- a plurality of directed graphical edges assigned to the pairs of sender and recipient address, wherein
- the directed graphical edges are originating from a vertex assigned to the sender address and ending at a vertex assigned to the recipient address, and
- a weight of an edge is the number of emails between the two nodes of the graph representation assigned to the sender and recipient address, and
- deriving the electronic mail related characteristics from the electronic mail exchange history comprises a step of analyzing electronic mails handled by at least one node provided in the electronic mail system (1).

5. The system according to claim 4, wherein the filter component (21, 22) is provided in an electronic mail transfer agent (20).

6. The system according to claim 4 or 5, wherein the sender and recipient information comprises sender and recipient name information.

7. The system according to one of the claims 4 to 6, further comprising a classification component configured to classify the present electronic mail as at least one of a solicited electronic mail, an unsolicited electronic mail, and a potential security threat based in the electronic indicator.

## Patentansprüche

1. Verfahren zum Filtern einer elektronischen Post in einem elektronischen Postsystem (1), wobei das Verfahren folgende Schritte umfasst:
- Bereitstellen einer elektronischen Graphendarstellung von nicht-inhaltsbezogenen mit elektronischer Post verknüpften Merkmalen, die aus dem Verlauf des elektronischen Postaustauschs in dem elektronischen Postsystem (1) abgeleitet sind, in einer Datenbank (23), umfassend
- Bereitstellen von mehreren elektronischen Paaren von Sender- und Empfängerinformationen, die beide mit einer elektronischen Post verknüpft sind, wobei die Sender- und Empfängerinformationen eine Sender- und eine Empfängeradresse umfassen, und wobei die Sender- und die Empfängeradresse gehasht sind, und
- Erzeugen der elektronischen Graphendarstellung mit mehreren grafischen Knoten, die der Sender- und der Empfängeradresse zugeordnet sind, und mehreren gerichteten grafischen Kanten, die den Paaren von Sender- und Empfängeradresse zugeordnet sind, wobei
- die gerichteten grafischen Kanten von einem Knoten ausgehen, der der Senderadresse zugeordnet ist, und an einem Knoten enden, der der Empfängeradresse zugeordnet ist, und
- eine Gewichtung einer Kante die Anzahl an elektronischer Post zwischen den beiden Knoten der Graphendarstellung ist, die der Sender- und der Empfängeradresse zugordnet sind, und
- Zuordnen zu einer vorliegenden elektronischen Post, die zur Übertragung in dem elektronischen Postsystem (1) bereitgestellt ist, eines elektronischen Indikators, der einen potentiellen missbräuchlichen Postcharakter der vorliegenden elektronischen Post anzeigt, umfassend:
- Parsen der vorliegenden elektronischen Post,
- Verarbeiten der geparsten Informationen, die von dem Parsen der vorliegenden elektronischen Post abgeleitet sind, und
- Bereitstellen des elektronischen Indikators, der den potentiellen missbräuchlichen Postcharakter der vorliegenden elektronischen Post angibt, indem vorliegende elektronische Postmerkmale, die von den geparsten Informationen abgeleitet sind, auf Grundlage der Graphendarstellung in der Datenbank (23) analysiert werden,
wobei das Ableiten der mit der elektronischen Post verknüpften Merkmale von dem Verlauf des elektronischen Postaustauschs einen Schritt des Analysierens von elektronischer Post, die von mindestens einem Knoten bearbeitet wird, der in dem elektronischen Postsystem (1) bereitgestellt ist, umfasst.

2. Verfahren nach Anspruch 1, das ferner folgende Schritte umfasst:
- Bereitstellen des elektronischen Indikators gegenüber einer Klassifizierungskomponente, und
- Klassifizieren der vorliegenden elektronischen Post durch die Klassifizierungskomponente als mindestens eine einer erwünschten elektronischen Post, einer unerwünschten elektronischen Post und einer potentiellen Sicherheitsbedrohung.

3. Verfahren nach einem der vorherigen Ansprüche, ferner umfassend einen Schritt des Verwendens der vorliegenden elektronischen Post als eine Lernpost für eine statistische Filterkomponente, wenn der elektronische Indikator einen nicht-missbräuchlichen Postcharakter anzeigt.

4. Elektronisches Postsystem (1), umfassend:
- mehrere Netzwerkstationen (5, 6, 7), die jeweils eine Fähigkeit aufweisen, als mindestens einer eines Senders von elektronischer Post und eines Empfängers von elektronischer Post zu fungieren,
- eine Datenbank (23), die eine elektronische Graphendarstellung von nicht-inhaltsbezogenen mit elektronischer Post verknüpften Merkmalen, die von dem Verlauf des elektronischen Postaustauschs zwischen den mehreren Netzwerkstationen (5, 6, 7) abgeleitet sind, umfasst, und
- eine Filterkomponente (21, 22), die mit der Datenbank (23) und den mehreren Netzwerkstationen (5, 6, 7) verbunden ist und konfiguriert ist, einer vorliegenden elektronischen Post, die zur Übertragung bereitgestellt ist, einen elektronischen Indikator zuzuordnen, der einen potentiellen missbräuchlichen Postcharakter der vorliegenden elektronischen Post anzeigt, umfassend:
- eine Parsing-Komponente (21), die konfiguriert ist, um die vorliegende elektronische Post zu parsen, und
- eine Verarbeitungskomponente (22), die konfiguriert ist, um geparste Informationen zu verarbeiten, die von dem Parsen der vorliegenden elektronischen Post abgeleitet sind, und den elektronischen Indikator bereitzustellen, der den potentiellen missbräuchlichen Postcharakter der vorliegenden elektronischen Post anzeigt, indem vorliegende elektronische Postmerkmale, die von den geparsten Informationen abgeleitet sind, auf Grundlage der Graphendarstellung in der Datenbank (23) analysiert werden,
wobei
- die elektronische Graphendarstellung von nicht-inhaltsbezogenen mit elektronischer Post verknüpften Merkmalen Folgendes umfasst:
- mehrere elektronische Paare von Sender- und Empfängerinformationen, die beide mit einer elektronischen Post verknüpft sind, wobei die Sender- und Empfängerinformationen eine Sender- und eine Empfängeradresse umfassen, und wobei die Sender- und die Empfängeradresse gehasht sind,
- mehrere grafische Knoten, die der Sender- und der Empfängeradresse zugeordnet sind, und
- mehrere gerichtete grafische Kanten, die den Paaren von Sender- und Empfängeradresse zugeordnet sind, wobei
- die gerichteten grafischen Kanten von einem Knoten ausgehen, der der Senderadresse zugeordnet ist, und an einem Knoten enden, der der Empfängeradresse zugeordnet ist, und
- eine Gewichtung einer Kante die Anzahl an elektronischer Post zwischen den beiden Knoten der Graphendarstellung ist, die der Sender- und der Empfängeradresse zugeordnet sind, und
- das Ableiten der mit der elektronischen Post verknüpften Merkmale von dem Verlauf des elektronischen Postaustauschs einen Schritt des Analysierens von elektronischer Post, die von mindestens einem Knoten bearbeitet wird, der in dem elektronischen Postsystem (1) bereitgestellt ist, umfasst.

5. System nach Anspruch 4, wobei die Filterkomponente (21, 22) in einem elektronischen Mail Transfer Agent (20) bereitgestellt ist.

6. System nach Anspruch 4 oder 5, wobei die Sender- und Empfängerinformationen Sender- und Empfängernamensinformationen umfassen.

7. System nach einem der Ansprüche 4 bis 6, ferner umfassend eine Klassifizierungskomponente, die konfiguriert ist, die vorliegende elektronische Post auf Grundlage des elektronischen Indikators als mindestens eine einer erwünschten elektronischen Post, einer unerwünschten elektronischen Post und einer potentiellen Sicherheitsbedrohung zu klassifizieren.

## Revendications

1. Procédé de filtrage d'un message électronique dans un système de messagerie électronique (1), le procédé comprenant les étapes consistant à :
- fournir une représentation de graphique électronique des caractéristiques relatives à un message électronique sans contenu déduites de l'historique d'échange de messages électroniques dans le système de messagerie électronique (1) dans une base de données (23), comprenant de
- fournir une pluralité de paires électroniques d'information d'expéditeur et de destinataire relatives toutes deux à un message électronique, dans lequel l'information d'expéditeur et de destinataire comprend une adresse d'expéditeur du destinataire et dans lequel les adresses d'expéditeur et de destinataire sont hachées, et
- générer la représentation graphique électronique avec une pluralité de sommets graphiques assignés à l'adresse d'émetteur et de destinataire et une pluralité de bords graphiques orientés assignés à la paire d'adresses d'expéditeur et de destinataire, dans lequel
- les bords graphiques orientés ont leur origine dans un sommet assigné à l'adresse de l'expéditeur et se terminant au niveau d'un sommet assigné à l'adresse de destinataire et
- un poids d'un bord est le nombre de courriels entre les deux noeuds de la représentation graphique assignée à l'adresse de l'expéditeur et du destinataire et
- assigner à un message électronique actuel dont la transmission est prévue dans le système de messagerie électronique (1) un indicateur électronique indiquant un caractère de message potentiellement abusif du message électronique actuel comprenant de :
- effectuer une analyse syntaxique du message électronique actuel,
- traiter l'information analysée syntaxiquement déduite de l'analyse syntaxique du message électronique actuel et
- fournir l'indicateur électronique indiquant le caractère de message potentiellement abusif du message électronique actuel en analysant des caractéristiques de messages électroniques actuelles et déduites de l'information analysée syntaxiquement sur la base de la représentation graphique dans la base de données (23),
dans lequel déduire les caractéristiques relatives aux messages électroniques de l'historique d'échange de messages électroniques comprend une étape d'analyse des courriels gérés par au moins un noeud prévu dans le système de messagerie électronique (1).

2. Procédé selon la revendication 1, comprenant en outre les étapes suivantes consistant à :
- fournir l'indicateur électronique à un composant de classification et
- classifier le message électronique actuel par le composant de classification comme au moins un d'un message électronique sollicité, un message électronique non sollicité et une menace de sécurité potentielle.

3. Procédé selon une des revendications précédentes, comprenant en outre une étape d'utilisation du message électronique actuel comme un message d'apprentissage pour un composant de filtre statistique si l'indicateur électronique indique un caractère de message non abusif.

4. Système de messagerie électronique (1), comprenant :
- une pluralité de stations de réseau (5,6,7) ayant chacune une capacité à fonctionner comme au moins un d'un expéditeur de courriel et un destinataire de courriel,
- une base de données (23) comprenant une représentation graphique électronique de caractéristiques relatives aux messages électroniques sans contenu déduites de l'historique des échanges de messages électroniques entre la pluralité de stations de réseau (5,6,7) et
- un composant de filtre (21,22) connecté à la base de données (23) et la pluralité de stations de réseau (5,6,7) et configuré pour assigner à un message électronique actuel dont la transmission est prévue un indicateur électronique indiquant un caractère de message potentiellement abusif du message électronique actuel, comprenant :
- un composant d'analyse syntaxique (21) configuré pour analyser syntaxiquement le message électronique actuel, et
- un composant de traitement (22) configuré pour traiter une information analysée syntaxiquement déduite de l'analyse syntaxique du message électronique actuel et fournir l'indicateur électronique indiquant le caractère de message potentiellement abusif du message électronique actuel en analysant les caractéristiques de message électronique actuel déduites de l'information analysée syntaxiquement sur la base de la représentation graphique dans la base de données (23),
dans lequel
- la représentation graphique électronique des caractéristiques relatives aux messages électroniques sans contenus comprend :
- une pluralité de paires électroniques d'information d'expéditeur et de destinataire relatives toutes deux à un message électronique, dans lequel l'information d'expéditeur et de destinataire comprend une adresse d'expéditeur du destinataire et dans lequel les adresses d'expéditeur et de destinataire sont hachées, et
- une pluralité de sommets graphiques assignés à l'adresse d'expéditeur et de destinataire, et
- une pluralité de bords graphiques orientés assignés aux paires d'adresses d'expéditeur et de destinataire, dans lequel
- les bords graphiques orientés ont leur origine dans un sommet assigné à l'adresse de l'expéditeur et se terminant au niveau d'un sommet assigné à l'adresse de destinataire et
- un poids d'un bord est le nombre de courriels entre les deux noeuds de la représentation graphique assignée à l'adresse de l'expéditeur et du destinataire et
- déduire les caractéristiques relatives aux messages électroniques de l'historique des échanges de messages électroniques comprend une étape d'analyse des courriels gérés par au moins un noeud prévu dans le système de messagerie électronique (1).

5. Système selon la revendication 4, dans lequel le composant de filtre (21,22) est prévu dans un agent de transfert de courriel (20).

6. Système selon les revendications 4 ou 5, dans lequel l'information d'expéditeur et du destinataire comprend une information de nom d'expéditeur et de destinataire.

7. Système selon une des revendications 4 à 6, comprenant en outre un composant de classification configuré pour classifier le message électronique actuel comme au moins un d'un message électronique sollicité, un message électronique non sollicité et une menace de sécurité potentielle sur la base de l'indicateur électronique.
